# EUROPEAN PATENT APPLICATION

(11) **EP 4 657 549 A1**
(43) Date of publication of application: **03.12.2025**
(21) Application number: 24747127.9
(22) Date of filing: 12.01.2024
(51) Int. Cl.: H01M 4/139, H01M 4/04

(54) **MIXTURE SHEET FORMING DEVICE**

(30) Priority: 24.01.2023 JP 2023008692
(71) Applicant: Panasonic Intellectual Property Management Co., Ltd., Kadoma-shi, Osaka 571-0057 (JP)
(72) Inventor: KOTANI, Norihiro, Osaka 571-0057 (JP); TAKAYAMA, Yosuke, Osaka 571-0057 (JP)
(74) Representative: Eisenführ Speiser
(86) International application number: PCT/JP2024/000560
(87) International publication number: WO 2024/157796

(57) **Abstract**

A mixture sheet forming device 1 includes: a storage unit 2 of a powdered electrode mixture 8; and a first forming roll 4 and a second forming roll 6 that are adjacent to each other with a predetermined spacing. The electrode mixture 8 in the storage unit 2 is loaded on a first circumferential surface 4a of the the first forming roll 4 and a second circumferential surface 6a of the second forming roll 6, and is fed into the spacing between the two rolls. The electrode mixture 8 is compressed into a sheet shape to form a mixture sheet 10. The first circumferential surface 4a has a first surface roughness, and the second circumferential surface 6a has a second surface roughness greater than the first surface roughness. A region R2, of the second circumferential surface 6a, where the powdered electrode mixture 8 is loaded, is smaller than a region R1, of the first circumferential surface 41, where the powdered electrode mixture 8 is loaded.

## Description

### TECHNICAL FIELD

The present disclosure relates to a compound sheet molding apparatus.

### BACKGROUND ART

Patent Literature 1 describes a powder rolling apparatus including a pair of mill rolls and a hopper provided on the mill rolls. In this powder rolling apparatus, composite particles containing an electrode active material (i.e., an electrode compound) are drawn from the hopper to a space between the rolls according to the rotation of the mill rolls. The pair of mill rolls roll the electrode compound to mold a rolled sheet, i.e., a compound sheet.

### RELATED-ART LITERATURE

### PATENT LITERATURE

[Patent Literature 1] JP2016-27573

### SUMMARY OF INVENTION

### TECHNICAL PROBLEM

In the case a compound sheet is molded by a pair of rolls from an electrode compound, it is desirable to mold a compound sheet in a stable manner.

The present disclosure addresses the issue described above, and a purpose thereof is to provide a technology for improving the molding stability of a compound sheet.

### SOLUTION TO PROBLEM

An embodiment of the present disclosure relates to a compound sheet molding apparatus. The apparatus includes: a reservoir for a powdery electrode compound; and a first molding roll and a second molding roll adjacent to each other at a predetermined interval, the first molding roll and the second molding roll carrying the electrode compound in the reservoir on a first circumferential surface of the first molding roll and a second circumferential surface of the second molding roll and supplying the electrode compound to a gap between the first molding roll and the second molding roll, and the first molding roll and the second molding roll compressing the electrode compound into a sheet shape to mold a compound sheet. The first circumferential surface has a first surface roughness. The second circumferential surface has a second surface roughness greater than the first surface roughness. A region in the second circumferential surface carrying the powdery electrode compound is smaller than a region in the first circumferential surface carrying the powdery electrode compound.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the molding stability of a compound sheet can be improved.

### BRIEF DESCRIPTION OF DRAWINGS

[Fig. 1] Fig. 1 is a schematic diagram of a compound sheet molding apparatus according to the embodiment.
[Fig. 2] Figs. 2A and 2B show variations of the blocking member.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

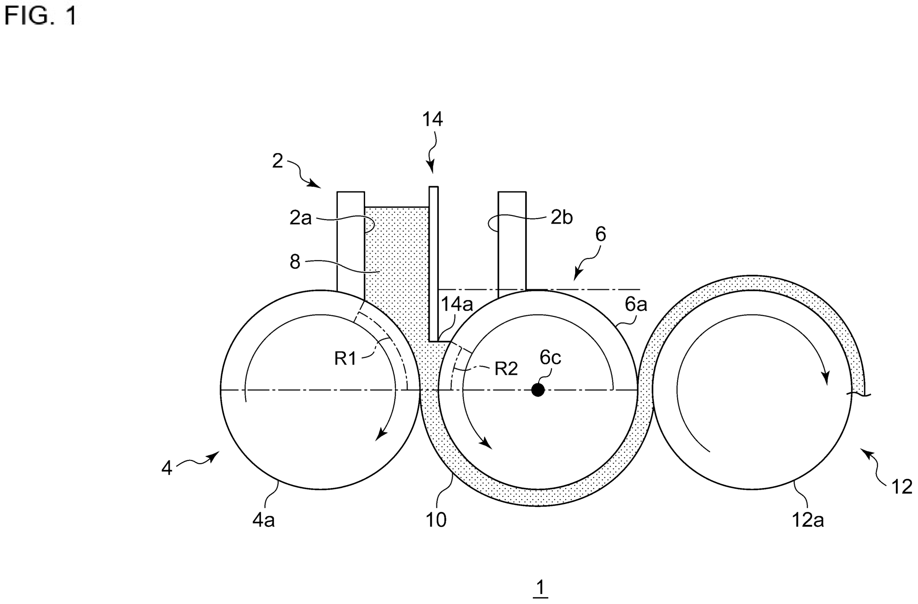

Fig. 1 is a schematic diagram of a compound sheet molding apparatus according to the embodiment. The compound sheet molding apparatus 1 includes a reservoir 2, a first molding roll 4, and a second molding roll 6. The reservoir 2 is, for example, a known hopper and stores a powdery or particulate electrode compound 8 that is a raw material of a compound sheet 10.

The electrode compound 8 includes an electrode active material and a binder content. The electrode compound 8 also includes a conductive agent as necessary. The binder content is a content that binds the electrode active materials to each other and includes at least one of a binder or a solvent. In the case of a general lithium ion secondary battery, the electrode active material is lithium cobalt oxide, lithium iron phosphate, etc. in the case of a positive electrode and is graphite, etc. in the case of a negative electrode. The conductive agent is graphite, carbon black, acetylene black, etc.

The binder is polytetrafluoroethylene (PTFE), polyvinylidene fluoride (PVdF), etc. In the case the electrode compound 8 is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the electrode compound 8 is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide solvent such as dimethylacetamide and N-methyl-2-pyrrolidone, etc.

The electrode compound 8 by way of one example is a so-called dry electrode compound in which the amount of the binder content included is 10% by mass or less with respect to the total mass of the electrode compound 8. In the case the electrode compound 8 is of a dry type, the amount of the binder content included may be 5% by mass or less, or 3% by mass or less, or 0.1% by mass, or substantially 0% with respect to the total mass of the electrode compound 8. By configuring the electrode compound 8 to be of a dry type, a drying furnace for drying the compound sheet 10 can be omitted.

The first molding roll 4 and the second molding roll 6 are disposed at the powder outlet of the reservoir 2. The first molding roll 4 and the second molding roll 6 are arranged such that a portion of the respective circumferential surfaces is exposed in a space in the reservoir 2 accommodating the electrode compound 8. In the following description, the circumferential surface of the first molding roll 4 is referred to as a first circumferential surface 4a, and the circumferential surface of the second molding roll 6 is referred to as a second circumferential surface 6a. The first molding roll 4 and the second molding roll 6 are oriented such that the respective rotation axes are parallel to each other, and the rolls are adjacent to each other at a predetermined interval. The second molding roll 6 is disposed further downstream in the conveying direction of the compound sheet 10 than the first molding roll 4.

The first molding roll 4 and the second molding roll 6 carry the electrode compound 8 in the reservoir 2 on the first circumferential surface 4a and the second circumferential surface 6a and supply it to the gap between the two rolls. Therefore, the first molding roll 4 and the second molding roll 6 also function as feed rolls. The first molding roll 4 and the second molding roll 6 rotate in mutually opposite directions and compress the electrode compound 8 supplied to the gap into a sheet shape. Thereby, the compound sheet 10 is molded. The compound sheet 10 is continuously fed from the gap between the first molding roll 4 and the second molding roll 6. Therefore, the compound sheet 10 is a strip elongated in the conveying direction.

Further, the first molding roll 4 and the second molding roll 6 of the embodiment differ from each other in the surface roughness of the respective circumferential surfaces. Specifically, the first circumferential surface 4a has a first surface roughness, and the second circumferential surface 6a has a second surface roughness greater than the first surface roughness. The difference in surface roughness between the first circumferential surface 4a and the second circumferential surface 6a causes the molded compound sheet 10 to be stretched by the pair of molding rolls. In other words, the first molding roll 4 and the second molding roll 6 also function as stretching rolls. The compound sheet 10 molded and stretched by the first molding roll 4 and the second molding roll 6 is supported by the second circumferential surface 6a having a great surface roughness and conveyed to the downstream side.

"Surface roughness" in the embodiment is the arithmetic average roughness Ra defined in JISB06012001. However, surface roughness is not limited to Ra and may be any other known index such as maximum height roughness Rz. In other words, the roughness of the second circumferential surface 6a may be greater than the roughness of the first circumferential surface 4a in terms of any of these roughness indices. Configuring the circumferential speed of the second molding roll 6 to be greater than the circumferential speed of the first molding roll 4 in addition to configuring the surface roughness of the second circumferential surface 6a to be greater than the surface roughness of the first circumferential surface 4a makes it easier to stretch the compound sheet 10.

The compound sheet molding apparatus 1 of the embodiment includes a stretching roll 12 on the downstream side of the second molding roll 6 in the conveyance direction of the compound sheet 10. The stretching roll 12 is oriented such that the rotation axis thereof is parallel to the rotation axis of the second molding roll 6, and the stretching roll 12 is adjacent to the second molding roll 6 at a predetermined interval. The compound sheet 10 is guided through the gap between the second molding roll 6 and the stretching roll 12. The second molding roll 6 and the stretching roll 12 can convey the compound sheet 10 by sandwiching the compound sheet 10 between the rolls and rotating in mutually opposite directions.

Further, the second molding roll 6 and the stretching roll 12 rotate at mutually different circumferential speeds. Specifically, the circumferential speed of the stretching roll 12 is higher than the circumferential speed of the second molding roll 6. Alternatively, the second molding roll 6 and the stretching roll 12 differ from each other in the surface roughness of the respective circumferential surfaces. Specifically, the surface roughness of the circumferential surface (hereinafter, referred to as a third circumferential surface 12a) of the stretching roll 12 is greater than the second surface roughness. The compound sheet 10 passing through the gap between the stretching roll 12 and the second molding roll 6 is stretched due to at least one of the difference in circumferential speed or the difference in surface roughness.

The compound sheet 10 is delivered to the side of the stretching roll 12 at a position where the second molding roll 6 and the stretching roll 12 face each other, is supported by the third circumferential surface 12a, and is conveyed to the downstream side. One or more stretching rolls 12 may be further disposed on the downstream side of the stretching roll 12 adjacent to the second molding roll 6. Alternatively, a conveyance roll having only a conveying function without a stretching function may be disposed. Further, a lamiroll for conveying a substrate like a current collector plate and laminating the compound sheet 10 on the substrate may be disposed.

The interval between the first molding roll 4 and the second molding roll 6 is determined according to the preset amount of supply of the electrode compound 8. When the electrode compound 8 exceeding the preset amount is drawn to the gap, therefore, the torque required for the rotation of each molding roll may exceed the assumed value. In this case, the rotation of each molding roll may be restrained, making it difficult to mold and stretch the compound sheet 10. Further, when the circumferential speed of the second molding roll 6 becomes lower, the ratio between the circumferential speed of the second molding roll 6 and the circumferential speed of the stretching roll 12 will be out of the design range, making it difficult to stretch and convey the compound sheet 10. Further, if the circumferential speed of the second molding roll 6 becomes lower than the circumferential speed of the first molding roll 4, it may become difficult to transfer the compound sheet 10 to the second circumferential surface 6a.

The amount of the electrode compound 8 drawn from the reservoir 2 to the gap between the pair of molding rolls by the first circumferential surface 4a and the second circumferential surface 6a can generally change minute by minute. In the embodiment, in particular, the pair of molding rolls mold and also stretch the compound sheet 10 so that the surface roughness of the second circumferential surface 6a is configured to be greater than the surface roughness of the first circumferential surface 4a. When the surface roughness is increased, the amount of the electrode compound 8 drawn to the gap increases. When the amount of the electrode compound 8 drawn increases, the range of change in the amount drawn can also increase. When the interval between the molding rolls is defined to be relatively large in anticipation of this increased range of change, an increase in the torque due to an increase in the amount drawn can be avoided, but it may become difficult to mold the compound sheet 10 when the amount drawn decreases. Accordingly, the molding stability of the compound sheet 10 can be reduced.

The embodiment addresses this by configuring a region R2 in the second circumferential surface 6a that carries the powdery electrode compound 8, i.e., the unmolded electrode compound 8 to be smaller than a region R1 in the first circumferential surface 4a that carries the powdery electrode compound 8. Stated otherwise, the portion of the second circumferential surface 6a exposed in the space accommodating the electrode compound 8 is smaller than the portion of the first circumferential surface 4a exposed in the accommodating space. By way of one example, the upstream end of the regions R1 and R2 in the direction of rotation of the molding roll is a boundary between the portion in contact with the electrode compound 8 and the portion not in contact. Further, the downstream end is a portion where the first circumferential surface 4a and the second circumferential surface 6a are closest to each other.

Thus, the degree of an increase in the amount of the electrode compound 8 drawn by the second circumferential surface 6a as a result of increasing the surface roughness of the second circumferential surface 6a can be suppressed by configuring the contact area between the second circumferential surface 6a and the unmolded electrode compound 8 to be smaller than the contact area between the first circumferential surface 4a and the unmolded electrode compound 8. Thereby, the range of change in the amount of the electrode compound 8 drawn can be reduced. As a result, the molding stability of the compound sheet 10 can be improved. The size of the region R2 by way of one example is adjusted such that the amount of the electrode compound 8 drawn by the first circumferential surface 4a per rotation of the first molding roll 4 or per unit time and the amount of the electrode compound 8 drawn by the second circumferential surface 6a per rotation of the second molding roll 6 or per unit time are equal.

In the embodiment, the region R2 is configured to be smaller than the region R1 by providing a blocking member 14 in the reservoir 2. The blocking member 14 is disposed in the reservoir 2 and blocks a part of the second circumferential surface 6a exposed in the reservoir 2 from the electrode compound 8. The blocking member 14 by way of one example is a partition plate inserted into the space accommodating the electrode compound 8. In this case, the accommodating space is divided by the blocking member 14 into a first space 2a located above the first molding roll 4 and a second space 2b located above the second molding roll 6. The electrode compound 8 is accommodated only in the first space 2a. This results in the blocking member 14 being interposed between the electrode compound 8 accommodated in the first space 2a and the part of the second circumferential surface 6a, making the region R2 smaller than the region R1.

Further, the blocking member 14 by way of one example is arranged to extend vertically and directly above the gap between the pairs of molding rolls, i.e., is located equidistant from the centers of rotation of the molding rolls. Preferably, the lower end of the blocking member 14, i.e., an end 14a nearer the gap between the molding rolls, is located above a center of rotation 6c of the second molding roll 6 and below the upper edge of the second circumferential surface 6a. A portion of the electrode compound 8 accommodated in the first space 2a is carried on the region R1 of the first circumferential surface 4a and drawn to the gap between the pair of molding rolls. Further, the portion of the electrode compound 8 accommodated in the first space 2a is carried by the region R2 of the second circumferential surface 6a below the end 14a of the blocking member 14 and drawn to the gap between the pair of molding rolls.

We have conducted a molding test (exemplary embodiment) on the compound sheet 10 using the compound sheet molding apparatus 1 according to the embodiment, and a molding test (comparative example) on the compound sheet 10 using a conventional compound sheet molding apparatus that does not include the blocking member 14. In the embodiment, the end 14a of the blocking member 14 is arranged such that the installation height d is 33%. Denoting the radius of the second molding roll 6 by R and the distance in the height direction from the center of rotation 6c to the end 14a by D, the installation height d is given by an equation d=D/R×100 [%].

In the comparative example, the amount of the electrode compound 8 input to the reservoir 2 was 50 g, 100 g, and 200 g. At any input amount, at least one of the problem of the torque necessary for the rotation of the molding roll exceeding the maximum output of the motor for rotating the molding roller or the problem of the failure of transfer of the compound sheet 10 to the second circumferential surface 6a occurred. In the embodiment, on the other hand, the input amount was set to 200 g, but the required torque did not exceed the maximum output of the motor, and the transfer of the compound sheet 10 to the second circumferential surface 6a could be performed without problem. Thus, it was confirmed that the molding stability of the compound sheet 10 is improved according to the compound sheet molding apparatus 1 of the embodiment. In addition, we have confirmed that the benefit of improving the molding stability can be obtained even when the installation height d is other than 33%.

In the embodiment, the blocking member 14 is disposed directly above the gap between the pair of molding rolls, but the arrangement of the blocking member 14 is not limited to this, and the blocking member 14 may be shifted toward one of the molding rolls. Further, when the blocking member 14 is a partition plate, the thickness can be appropriately adjusted. Preferably, the thickness of the blocking member 14 is adjusted to a thickness that is not deformed by the weight of the electrode compound 8 accommodated in the first space 2a.

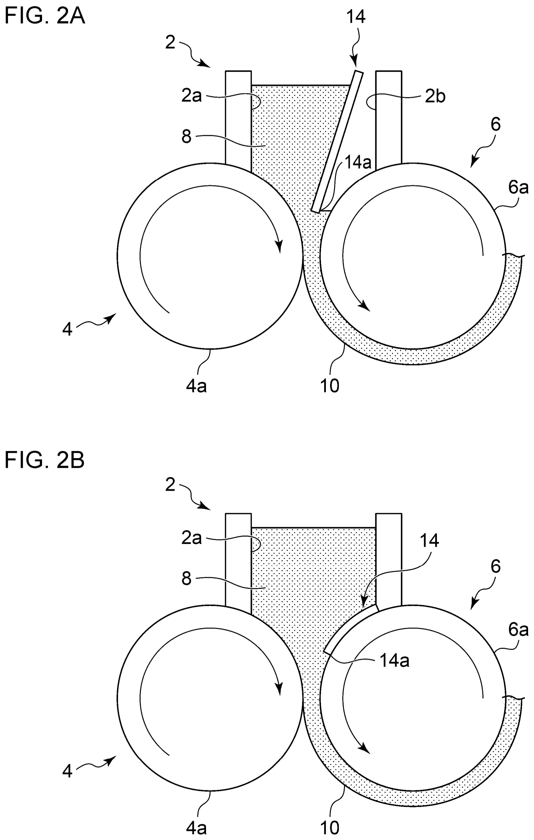

Further, the following variations of the blocking member 14 may be possible. Fig. 2A and Fig. 2B show variations of the blocking member 14. As shown in Fig. 2A, for example, the blocking member 14 may be tilted at an angle. Preferably, the upper end of the blocking member 14 is tilted toward the second molding roll 6. In this case, the volume of the first space 2a can be increased, and the amount of the electrode compound 8 accommodated in the reservoir 2 can be increased. Alternatively, it is possible to suppress an increase in the size of the first space 2a to secure the storage capacity for the electrode compound 8.

Further, as shown in Fig. 2B, the blocking member 14 may have a shape curved along the second circumferential surface 6a. In this case, the second space 2b can be substantially omitted. Accordingly, the storage capacity for the electrode compound 8 in the reservoir 2 can be further increased. Alternatively, it is possible to further suppress an increase in the size of the first space 2a to secure the storage capacity for the electrode compound 8.

The surface of the blocking member 14 preferably has a third surface roughness equal to or greater than the first surface roughness. In particular, it is preferable that the surface exposed in the first space 2a and in contact with the electrode compound 8 has the third surface roughness. This makes it possible to suppress the adhesion of the electrode compound 8 to the blocking member 14. Accordingly, the molding stability of the compound sheet 10 can be further enhanced.

Further, in the embodiment, the region R2 is made smaller than the region R1 by blocking the second circumferential surface 6a from the electrode compound 8 by using the blocking member 14. Alternatively, the region R2 may be made smaller than the region R1 without using the blocking member 14. For example, the region R2 may be made smaller than the region R1 by using the reservoir 2 not having the second space 2b and configured such that the space for accommodating the electrode compound 8 is occupied only by the first space 2a, i.e., by using the reservoir 2 having an outer shell reaching the position of the blocking member 14. In the case the blocking member 14 is used, however, an existing hopper can be used as the reservoir 2. For this reason, the cost required to implement the embodiment can be reduced.

As described above, in the compound sheet molding apparatus 1 according to the embodiment, the first circumferential surface 4a of the first molding roll 4 has the first surface roughness, and the second circumferential surface 6a of the second molding roll 6 has the second surface roughness greater than the first surface roughness. The region R2 in the second circumferential surface 6a carrying the powdery electrode compound 8, i.e., the electrode compound 8 before being molded into the compound sheet 10, is smaller than the region R1 in the first circumferential surface 4a carrying the powdery electrode compound 8. Thereby, the range of change in the amount of the electrode compound 8 supplied to the gap between the pair of molding rolls can be reduced so that the molding stability of the compound sheet 10 can be improved.

When the electrode compound 8 is a dry electrode compound, i.e., when the binder content is 10% by mass or less, in particular, the fluidity is lower than in the wet electrode compound, i.e., than when the binder content is more than 10% by mass. Thus, the load exerted on each molding roll may be excessive when the amount of the electrode compound 8 increases. Therefore, the compound sheet molding apparatus 1 of the embodiment can exhibit a particularly beneficial function when the electrode compound 8 is of a dry type. The molding stability of the compound sheet 10 can be improved by the embodiment equally when the electrode compound 8 is of a wet type.

The embodiment of the present disclosure has been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiments may be defined by the following items.

### [Item 1]

A compound sheet molding apparatus (1) including:
a reservoir (2) for a powdery electrode compound (8); and
a first molding roll (4) and a second molding roll (6) adjacent to each other at a predetermined interval, the first molding roll (4) and the second molding roll (6) carrying the electrode compound (8) in the reservoir (2) on a first circumferential surface (4a) of the first molding roll (4) and a second circumferential surface (6a) of the second molding roll (6) and supplying the electrode compound (8) to a gap between the first molding roll (4) and the second molding roll (6), and the first molding roll (4) and the second molding roll (6) compressing the electrode compound (8) into a sheet shape to mold a compound sheet (10),
wherein the first circumferential surface (4a) has a first surface roughness,
wherein the second circumferential surface (6a) has a second surface roughness greater than the first surface roughness, and
wherein a region (R2) in the second circumferential surface (6a) carrying the powdery electrode compound (8) is smaller than a region (R1) in the first circumferential surface (4a) carrying the powdery electrode compound (8).

### [Item 2]

The compound sheet molding apparatus (1) according to Item 1,
wherein the electrode compound (8) includes an electrode active material and a binder content, and an amount of the binder content is 10% by mass or less with respect to the total mass of the electrode compound (8).

### [Item 3]

The compound sheet molding apparatus (1) according to Item 1 or Item 2, including:
a blocking member (14) that blocks, from the electrode compound (8) in the reservoir (2), a part of the second circumferential surface (6a) exposed in the reservoir (2).

### [Item 4]

The compound sheet molding apparatus (1) according to Item 3,
wherein a surface of the blocking member (14) has a third surface roughness equal to or less than the first surface roughness.

### [Item 5]

The compound sheet molding apparatus (1) according to any one of Item 1 through Item 4,
wherein the second molding roll (6) supports and conveys the compound sheet (10) on the second circumferential surface (6a), and
wherein the compound sheet molding apparatus (1) includes a stretching roll (12) adjacent to the second molding roll (6) at a predetermined interval and configured to stretch the compound sheet (10) passing through a gap from the second molding roll (6).

### INDUSTRIAL APPLICABILITY

The present disclosure is applicable to a compound sheet molding apparatus.

### REFERENCE SIGNS LIST

1 compound sheet molding apparatus, 2 reservoir, 4 first molding roll, 4a first circumferential surface, 6 second molding roll, 6a second circumferential surface, 8 electrode compound, 10 compound sheet, 12 stretching roll, 14 blocking member.

## Claims

1. A compound sheet molding apparatus comprising:
a reservoir for a powdery electrode compound; and
a first molding roll and a second molding roll adjacent to each other at a predetermined interval, the first molding roll and the second molding roll carrying the electrode compound in the reservoir on a first circumferential surface of the first molding roll and a second circumferential surface of the second molding roll and supplying the electrode compound to a gap between the first molding roll and the second molding roll, and the first molding roll and the second molding roll compressing the electrode compound into a sheet shape to mold a compound sheet,
wherein the first circumferential surface has a first surface roughness,
wherein the second circumferential surface has a second surface roughness greater than the first surface roughness, and
wherein a region in the second circumferential surface carrying the powdery electrode compound is smaller than a region in the first circumferential surface carrying the powdery electrode compound.

2. The compound sheet molding apparatus according to Claim 1,
wherein the electrode compound includes an electrode active material and a binder content, and an amount of the binder content is 10% by mass or less with respect to the total mass of the electrode compound.

3. The compound sheet molding apparatus according to Claim 1 or 2, comprising:
a blocking member that blocks, from the electrode compound in the reservoir, a part of the second circumferential surface exposed in the reservoir.

4. The compound sheet molding apparatus according to Claim 3,
wherein a surface of the blocking member has a third surface roughness equal to or less than the first surface roughness.

5. The compound sheet molding apparatus according to Claim 1 or 2,
wherein the second molding roll supports and conveys the compound sheet on the second circumferential surface, and
wherein the compound sheet molding apparatus includes a stretching roll adjacent to the second molding roll at a predetermined interval and configured to stretch the compound sheet passing through a gap from the second molding roll.
